(19) Europäisches Patentamt
European Patent Office
Office européen des brevets

(11) Veröffentlichungsnummer: **0 459 201 B1**

# (12) EUROPÄISCHE PATENTSCHRIFT

(45) Veröffentlichungstag der Patentschrift: **09.08.95**

(51) Int. Cl.$^6$: **C09B 23/08**, G11B 7/24

(21) Anmeldenummer: **91107671.9**

(22) Anmeldetag: **11.05.91**

Die Akte enthält technische Angaben, die nach dem Eingang der Anmeldung eingereicht wurden und die nicht in dieser Patentschrift enthalten sind.

## (54) Carbamat- oder Amidgruppen aufweisende heterocyclische Polymethinfarbstoffe sowie optisches Aufzeichnungsmedium.

(30) Priorität: **21.05.90 DE 4016298**

(43) Veröffentlichungstag der Anmeldung:
**04.12.91 Patentblatt 91/49**

(45) Bekanntmachung des Hinweises auf die Patenterteilung:
**09.08.95 Patentblatt 95/32**

(84) Benannte Vertragsstaaten:
**CH DE FR GB IT LI**

(56) Entgegenhaltungen:
**EP-A- 0 342 810**
**GB-A- 1 184 496**
**US-A- 4 908 294**

(73) Patentinhaber: **BASF Aktiengesellschaft**
**Carl-Bosch-Strasse 38**
**D-67063 Ludwigshafen (DE)**

(72) Erfinder: **Acker, Michael, Dr.**
**Glockenzehnten 45**
**W-6900 Heidelberg (DE)**
Erfinder: **Albert, Bernhard, Dr.**
**Rietburgstrasse 13**
**W-6701 Maxdorf (DE)**
Erfinder: **Brosius, Sibylle, Dr.**
**Cordovastrasse 29**
**W-6700 Ludwigshafen (DE)**
Erfinder: **Schomann, Klaus Dieter, Dr.**
**Kopernikusstrasse 47**
**W-6700 Ludwigshafen (DE)**
Erfinder: **Kuppelmaier, Harald, Dr.**
**In den Bannzaeunen 17**
**W-6701 Goennheim (DE)**

**EP 0 459 201 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Polymethinfarbstoffe der Formel I

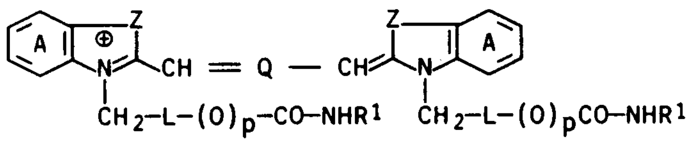 (I),

in der

p 0 oder 1,

Z Stickstoff, Sauerstoff, Schwefel, Isopropyliden, Cyclohexyliden oder den Rest CH = CH-,

Q einen Rest der Formel

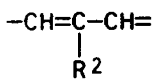 , 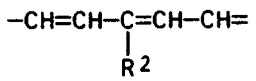 , 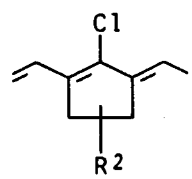 oder 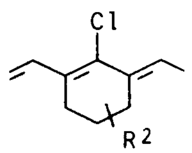 ,

wobei $R^2$ für Wasserstoff, Chlor, Brom oder $C_1$-$C_6$-Alkyl steht,

L eine direkte Bindung oder $C_1$-$C_{12}$-Alkylen,

$R^1$ $C_1$-$C_{20}$-Alkyl, das gegebenenfalls durch Hydroxy, Halogen oder Phenyl substituiert ist und durch ein oder mehrere Sauerstoffatome in Etherfunktion unterbrochen sein kann, gegebenenfalls substituiertes $C_5$-$C_7$-Cycloalkyl oder gegebenenfalls substituiertes Phenyl und

$X^{\ominus}$ ein Anion bedeuten und

die Ringe A gegebenenfalls substituiert und/oder benzoanelliert sind,
sowie ein optisches Aufzeichnungsmedium, das die neuen Farbstoffe enthält.

Für die Herstellung eines optischen Aufzeichnungsmediums müssen die zur Anwendung kommenden Farbstoffe einem besonderen Anforderungsprofil genügen. So sollten die Farbstoffe eine intensive Absorption im Wellenlängenbereich handelsübliche Halbleiterlaser (700 bis 900 nm) aufweisen und darüber hinaus in dem genannten Bereich eine hohe Reflexion besitzen. Weiterhin sollten sie eine hohe Löslichkeit aufweisen, um eine dünne Speicherschicht nach dem Spincoating-Verfahren herstellen zu können. Die erzeugten Speicherschichten sollten homogen und über einen langen Zeitraum hinweg gegenüber äußeren Einflüssen stabil sein. Mittels eines Halbleiterlasers sollten die Aufzeichnungsmedien beschreibbar und anschließend gut lesbar sein und sich durch ein möglichst hohes Singal:Rauschverhältnis auszeichnen.

Aus der GB-A-1 001 480 sind Trimethinfarbstoffe bekannt, die u.a. Benzthiazol-, Benzoxazol- und Indolreste aufweisen.

Ähnliche Polymethinfarbstoffe sind weiterhin in der US-A-4 908 294, EP-A-342 810, GB-A-1 184 496 sowie DE-A- 3 721 850 beschrieben.

Die nach dem Stand der Technik bekannten Farbstoffe weisen aber sämtlich noch Mängel in einem der genannten Anforderungspunkte auf.

Aufgabe der vorliegenden Erfindung war es daher, neue Farbstoffe bereitzustellen, bei denen solche Mängel nicht mehr oder nur in geringem Maße auftreten.

Demgemäß wurden die eingangs näher bezeichneten Polymethinfarbstoffe der Formel I gefunden.

Darüber hinaus wurde ein optisches Aufzeichnungsmedium, enthaltend einen Träger und eine gegenüber Laserlicht empfindliche, einen Polymethinfarbstoff der Formel I und gegebenenfalls Bindemittel enthaltende dünne Schicht, gefunden.

Alle in den obengenannten Resten der Formel I auftretenden Alkylgruppen können sowohl geradkettig als auch verzweigt sein.

Reste L sind z.B. Methylen, Ethylen, 1,2- oder 1,3-Propylen, 1,2-, 1,3-, 2,3- oder 1,4-Butylen, Pentamethylen, Hexamethylen, Heptamethylen, Octamethylen, Nonamethylen, Decamethylen, Undecamethylen oder Dodecamethylen.

Wenn der Rest $R^1$ substituiertes $C_1$-$C_{20}$-Alkyl bedeutet, können als Substituenten z.B. Hydroxy, Phenyl, Halogen, $C_1$-$C_4$-Alkanoyl oder $C_1$-$C_4$-Alkoxycarbonyl in Betracht kommen. Die Alkylkette kann außerdem durch ein oder mehrere, insbesondere 1 bis 3, Sauerstoffatome in Etherfunktion unterbrochen sein.

Wenn die Ringe A in Formel I substituiert sind, können als Substituenten z.B. $C_1$-$C_6$-Alkyl, Halogen, dabei besonders Chlor oder Brom, Hydroxy, $C_1$-$C_6$-Alkoxy, Cyano, Amino, $C_1$-$C_6$-Mono- oder Dialkylamino oder Phenyl in Betracht kommen.

Wenn der Rest $R^1$ für substituiertes $C_5$-$C_7$-Cycloalkyl steht, können als Substituenten beispielsweise $C_1$-$C_4$-Alkyl, Chlor oder Brom in Betracht kommen.

Wenn für $R^1$ substituiertes Phenyl steht, können als Substituenten z.B. $C_1$-$C_4$-Alkyl, $C_1$-$C_4$-Alkoxy, Halogen, dabei insbesondere Chlor oder Brom, in Betracht kommen.

Reste $R^1$ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl (die Bezeichnungen Isooctyl, Isononyl, Isodecyl und Isotridecyl sind Trivialbezeichnungen und stammen von den nach der Oxosynthese erhaltenen Alkoholen (vgl. dazu Ullmanns Encyclopädie der technischen Chemie, 4. Auflage, Band 7, Seiten 215 bis 217, sowie Band 11, Seiten 435 und 436), Benzyl, 1- oder 2-Phenylethyl, Trifluormethyl, Trichlormethyl, Brommethyl, 2-Bromethyl, 1,1,1-Trifluorethyl, Heptafluorpropyl, 4-Brombutyl, 2-Methoxyethyl, 2-Ethoxyethyl, 2-Propoxyethyl, 2-Butoxyethyl, 2-Benzyloxyethyl, 2- oder 3-Methoxypropyl, 2- oder 3-Ethoxypropyl, 2- oder 3-Isopropoxyethyl, 3-Benzyloxypropyl, 2- oder 4-Ethoxybutyl, 5-Ethoxypentyl, 6-Methoxyhexyl, 3,6-Dioxaheptyl, 3,6-Dioxaoctyl, 3,6-Dioxadecyl, 3,6,9-Trioxadecyl, 4-Oxa-6-ethyldecyl, 3,6-Dioxa-7-phenylheptyl, Ethoxycarbonylmethyl, 2-Ethoxycarbonylethyl, 2- oder 3-Methoxycarbonylpropyl, 2-Hydroxyethyl, 2- oder 3-Hydroxypropyl, 2- oder 4-Hydroxybutyl, 5-Hydroxypentyl, 6-Hydroxyhexyl, 7-Hydroxyheptyl, 8-Hydroxyoctyl, Cyclopentyl, Cyclohexyl, Cycloheptyl, 3-Methylcyclopentyl, 4-Methylcyclohexyl, 4-Ethylcyclohexyl, 2,3-Dichlorcyclohexyl, Phenyl, 2-Methylphenyl, 4-Methoxyphenyl, 2-Chlorphenyl oder 2,4-Dichlorphenyl.

Reste Q sind z.B. -CH = CH-CH = ,

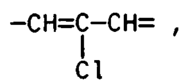 , 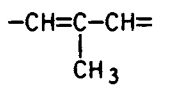 , 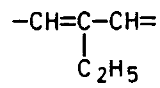 ,

-CH = CH-CH = CH-CH = ,

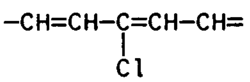 , 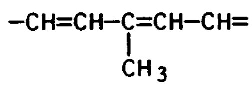 , 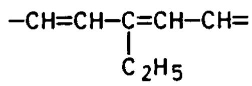 , 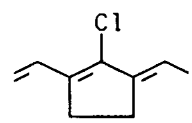 ,

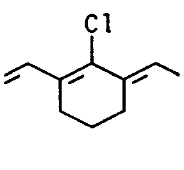 , 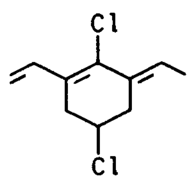 , 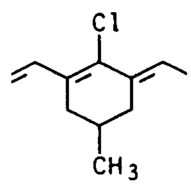 oder 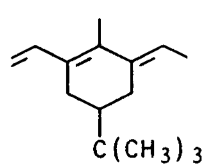

$X^{\ominus}$ in Formel I bedeutet ein Anion. Dabei kommen sowohl anorganische als auch organische Anionen in Betracht. Geeignete Anionen sind z.B. Halogenid, wie Chlorid, Bromid oder Iodid, Sulfat, Perchlorat, Phosphat, Hexafluoroantimonat, Tetrafluoroborat, Trichlorozinkat, Methylsulfonat, Phenylsulfonat, Hexafluorophosphat, 4-Methylphenylsulfonat, Acetat, Lactat, Salicylat oder Tetraphenylboranat.

$X^{\ominus}$ kann weiterhin beispielsweise auch ein Anion einer Heteropolysäure auf der Basis Wolfram und/oder Molybdän mit Phosphor, Silicium, Vanadium, Kobalt, Aluminium, Mangan, Chrom und/oder Nickel sein. Weiterhin kommt z.B. auch das Kupfer(I)-hexacyanoferrat(II)-anion in Betracht.

Die Herstellung der Heteropolysäuren oder der Salze dieser Säuren ist bekannt. Die Säuren werden durch Ansäuern von Lösungen der Wolframate, Molybdate und/oder Vanadate in Form der Alkali- und/oder Ammoniumsalze in Gegenwart von Phosphat und/oder wasserlöslichen Silicaten erhalten. Dabei können durch Wahl der der Verhältnisse Wolframat, Molybdat, Vanadat und des Phosphats und der Kieselsäure oder von deren Salzen, verschiedenartige Heteropolysäuren aufgebaut werden. Als Beispiele für Heteropolysäuren sind zu nennen:

Phosphormolybdänsäure, Silicomolybdänsäure, Phosphorwolframsäure, Silicowolframsäure, Phosphorvanadinsäure, Silicovanadinsäure, Phosphorwolframmolybdänsäure, Silicowolframmolybdänsäure, Phosphor- oder Silicowolframvanadinsäure oder Phosphorsilicowolframmolybdänsäure, die gegebenenfalls noch Vanadin eingebaut enthält.

$X^{\ominus}$ kann darüber hinaus z.B. auch für einen anionischen Übergangsmetallchelat-Komplex stehen, beispielsweise ein Nickeldithiolat-Anion der Formel

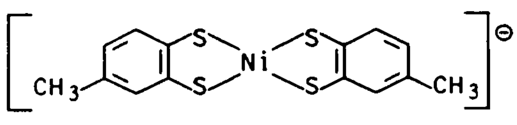

oder

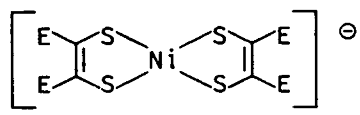

E = CN, Phenyl

Bevorzugt sind Polymethinfarbstoffe der Formel I, in der

Z Schwefel, Isopropyliden, Cyclohexyliden oder den Rest -CH = CH- und

$R^1$ $C_1$-$C_{20}$-Alkyl, das gegebenenfalls durch Phenyl oder Hydroxy substituiert ist und durch 1 bis 3 Sauerstoffatome in Etherfunktion unterbrochen sein kann, $C_5$-$C_7$-Cycloalkyl oder Phenyl bedeuten.

Besonders bevorzugt sind solche Polymethinfarbstoffe der Formel I, in der

Z Isopropyliden oder Cyclohexyliden,

Q einen Rest der Formel

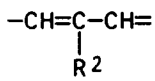

,

-CH = CH-CH = CH-CH = ,

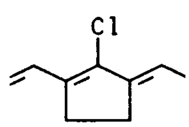

,

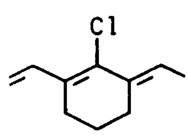

oder

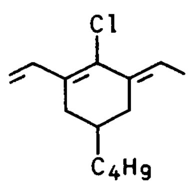

,

wobei $R^2$ für Wasserstoff, Chlor, Brom oder Methyl steht,

L eine direkte Bindung oder $C_1$-$C_6$-Alkylen und

$R^1$ $C_1$-$C_{18}$-Alkyl, das gegebenenfalls durch Phenyl oder Hydroxy substituiert ist und durch 1 bis 3 Sauerstoffatome in Etherfunktion unterbrochen sein kann, Cyclohexyl oder Phenyl bedeuten und

die Ringe A gegebenenfalls durch Chlor substituiert und/oder benzoanelliert sind.

Bevorzugte Anionen $X^{\ominus}$ sind Chlorid, Bromid, Iodid, Tetrafluoroborat, Perchlorat, 4-Methylphenylsulfonat oder Hexafluorophosphat.

Die Farbstoffe der Formel I können, ausgehend von methylenaktiven heterocyclischen Verbindungen der Formel II, in der p, Z, $R^1$, A und $X^{\ominus}$ jeweils die obengenannte Bedeutung besitzen, durch Kondensation mit geeigneten C-1-, C-3- oder C-5-Bausteinen in saurem oder alkalischem Milieu in Gegenwart eines inerten Lösungsmittels bei einer Temperatur von 40 bis 150 °C hergestellt werden.

Dies wird durch das folgende Schema beschrieben.

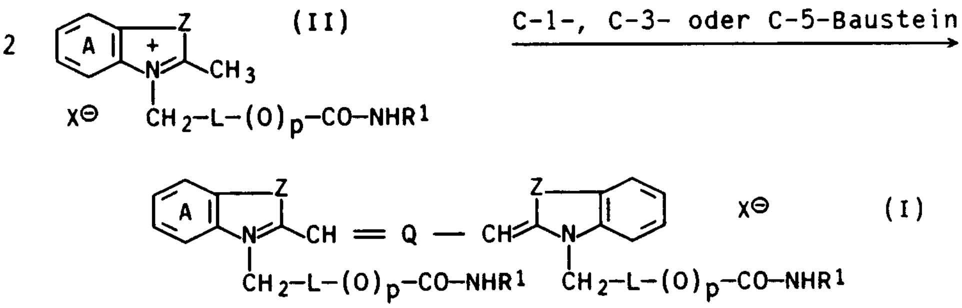


(II) (I)

Als C-1-, C-3- oder C-5-Bausteine kommen beispielsweise in Betracht:

C-1: $HC(OC_2H_5)_3$;

C-3: $C_6H_5N=CH\text{-}CH=CH\text{-}NHC_6H_5 \bullet HCl$, $C_6H_5N=CH\text{-}C(CH_3)=CH\text{-}NHC_6H_5 \bullet HCl$, $C_6H_5N=CH\text{-}CBr=CH\text{-}NHC_6H_5 \bullet HBr$, $(CH_3O)_2CH\text{-}CH_2\text{-}CH(OCH_3)_2$, $C_2H_5O\text{-}CH=CH\text{-}CH(OC_2H_5)_2$, $C_6H_5N=CH\text{-}CCl=CH\text{-}NHC_6H_5 \bullet HCl$ oder

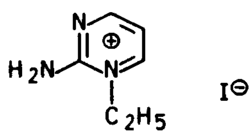

;

C-5: $C_6H_5N=CH\text{-}CH=CH\text{-}CH=CH\text{-}NHC_6H_5 \bullet HCl$

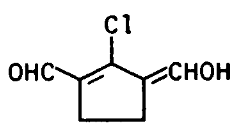 , 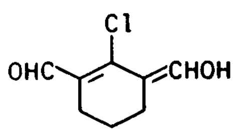 oder 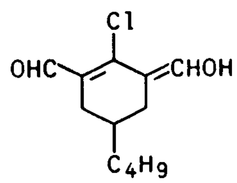 .

Diese Herstellungsmethode für Polymethinfarbstoffe ist an sich bekannt und beispielsweise in Houben-Weyl "Methoden oder Organischen Chemie", Band 5/1d, Seite 227, beschrieben.

Die Herstellung der methylenaktiven heterocyclischen Verbindungen der Formel II mit Amidsubstitutionsmuster gelingt z.B. ausgehend von Heterocyclen der Formel III

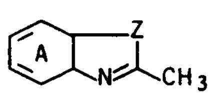

(III),

in der A und Z jeweils die obengenannte Bedeutung besitzen, durch Quaternierung mit Carbonsäureamiden der Formel IV

$Hal\text{-}L\text{-}CO\text{-}NHR^1$ (IV),

worin $R^1$ und L jeweils die obengenannte Bedeutung besitzen und Hal für Halogen steht.

Diejenigen Verbindungen der Formel II mit Carbamatsubstitutionsmuster erhält man in analoger Weise durch Umsetzung von Heterocyclen der Formel III mit Carbamaten der Formel V

$Br\text{-}L\text{-}O\text{-}CO\text{-}NHR^1$ (V),

worin L und $R^1$ jeweils die obengenannte Bedeutung besitzen.

Die Herstellung der Verbindungen der Formel II erfolgt nach an sich bekannten Methoden. Hierzu wird z.B. die neutrale heterocyclische Verbindung der Formel III mit einem Carbonsäureamid der Formel IV oder mit einem Carbamat der Formel V in einem inerten Lösungsmittel (z.B. Buttersäurenitril, Toluol, 1,1,2-Trichlorethan oder Ligroin) bei einer Temperatur von 20 bis 160 °C umgesetzt.

Die Polymethinfarbstoffe der Formel I weisen eine hohe molare Absorption auf. Sie sind in organischen Lösungsmitteln, inbesondere in niederen Alkoholen, wie Methanol, Ethanol oder Propanol, oder in thermoplastischen oder vernetzten Kunststoffen (Bindemitteln) sehr gut löslich.

Eine weitere Aufgabe der vorliegenden Erfindung war es, ein neues optisches Aufzeichnungsmedium bereitzustellen, das in einfacher Weise hergestellt werden kann. Das Medium sollte gut beschreibbar und anschließend gut lesbar sein, wobei das Singal:Rausch-Verhältnis möglichst hoch sein sollte. Darüber hinaus sollte sich das Aufzeichnungsmedium durch eine hohe Stabilität auszeichnen.

Die vorliegende Erfindung betrifft nun weiterhin ein optisches Aufzeichnungsmedium, enthaltend einen Träger und eine gegenüber Laserlicht empfindliche, Farbstoff und gegebenenfalls Bindemittel enthaltende dünne Schicht, dadurch gekennzeichnet, daß der Farbstoff ein Polymethinfarbstoff ist, die Formel I

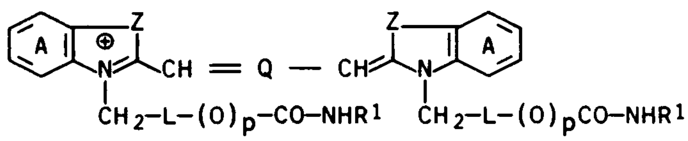 (I)

aufweist, in der

- p 0 oder 1,
- Z Stickstoff, Sauerstoff, Schwefel, Isopropyliden, Cyclohexyliden oder den Rest CH = CH-,
- Q einen Rest der Formel

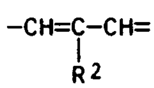 , 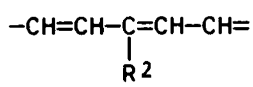 , 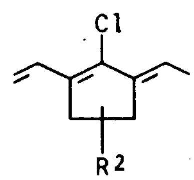 oder 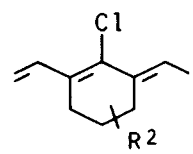 ,

  wobei $R^2$ für Wasserstoff, Chlor, Brom oder $C_1$-$C_6$-Alkyl steht,
- L eine direkte Bindung oder $C_1$-$C_{12}$-Alkylen,
- $R^1$ $C_1$-$C_{20}$-Alkyl, das gegebenenfalls durch Hydroxy, Halogen oder Phenyl substituiert ist und durch ein oder mehrere Sauerstoffatome in Etherfunktion unterbrochen sein kann, gegebenenfalls substituiertes $C_5$-$C_7$-Cycloalkyl oder gegebenenfalls substituiertes Phenyl und
- $X^\ominus$ ein Anion bedeuten und

die Ringe A gegebenenfalls substituiert und/oder benzoanelliert sind.

Bevorzugt ist ein optisches Aufzeichnungsmedium, das einen Polymethinfarbstoff der Formel I enthält, in der

- Z Schwefel, Isopropyliden, Cyclohexyliden oder den Rest -CH = CH- und
- $R^1$ $C_1$-$C_{20}$-Alkyl, das gegebenenfalls durch Phenyl oder Hydroxy substituiert ist und durch 1 bis 3 Sauerstoffatome in Etherfunktion unterbrochen sein kann, $C_5$-$C_7$-Cycloalkyl oder Phenyl bedeuten.

Besonders bevorzugt ist ein optisches Aufzeichnungsmedium, das einen Polymethinfarbstoff der Formel I enthält, in der

- Z Isopropyliden oder Cyclohexyliden,
- Q einen Rest der Formel

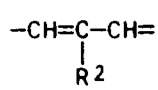 ,

$-CH = CH-CH = CH-CH =$ ,

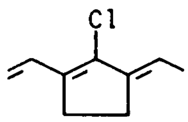 , 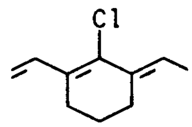 oder 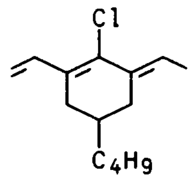 ,

wobei $R^2$ für Wasserstoff, Chlor, Brom oder Methyl steht,

L eine direkte Bindung oder $C_1$-$C_6$-Alkylen und

$R^1$ $C_1$-$C_{18}$-Alkyl, das gegebenenfalls durch Phenyl oder Hydroxy substituiert ist und durch 1 bis 3 Sauerstoffatome in Etherfunktion unterbrochen sein kann, Cyclohexyl oder Phenyl bedeuten und

die Ringe A gegebenenfalls durch Chlor substituiert und/oder benzoanelliert sind.

Als Träger kommen zweckmäßig transparente Träger, wie Glas oder Kunststoffe in Betracht. Geeignete Kunststoffe sind beispielsweise Poly(meth)acrylate, Polycarbonate, Polyester, Epoxide, Polyolefine (z.B. Polymethylpenten), Polyamid, Polyvinylchlorid, Polystyrol oder Polyvinylester.

Ein bevorzugtes Aufzeichnungsmedium weist einen Träger aus Polycarbonat oder Poly(meth)acrylaten, insbesondere aber aus Polycarbonat auf.

Weiterhin bevorzugt ist ein optisches Aufzeichnungsmedium, das 1 bis 30 Gew.-%, bezogen auf den Farbstoff, an Bindemittel enthält.

Wie oben bereits erwähnt, weisen die neuen Polymethinfarbstoffe eine gute Löslichkeit in den meisten organischen Lösungsmitteln auf, so daß diese Farbstoffe direkt (ohne Schutzschicht) auf strukturierte Kunststoffsubstrate, insbesondere Polycarbonatsubstrate, aufgeschleudert werden können.

Wie oben ausgeführt, enthält die aufzuschleudernde Lösung vorzugsweise ein Bindemittel, um eine gute Langzeitstabilität des Aufzeichnungsmediums zu erreichen und vor allem um die optimale Viskosität der aufzuschleudernden Lösung einstellen zu können. Als Bindemittel kommen beispielsweise Siliconharze, Epoxide, Poly(meth)acrylate, Polystyrolhomo- und -copolymerisate, Polyvinylcarbazol, Polyvinylpyrrolidon, Polyvinylestercopolymere, Polyvinylethercopolymere, Polyvinylidenchloridcopolymere, Acrylnitrilcopolymere, Polyvinylchlorid oder deren Copolymere, Celluloseacetat oder Nitrocellulose in Betracht.

Das erfindungsgemäße optische Aufzeichnungsmedium wird zweckmäßig durch Aufschleudern einer Lösung, enthaltend organische Lösungsmittel, einen oder mehrere Polymethinfarbstoffe I und gegebenenfalls Bindemittel, hergestellt. Die aufzuschleudernde Lösung weist dabei zweckmäßig einen Feststoffgehalt von 1 bis 30 Gew.-%, bezogen auf die Lösung auf.

Geeignete Lösungsmittel sind z.B. Propanol, Isopropanol, Butanol, Diacetonalkohol, Methylethylketon, Toluol, 1,1,2-Trichlorethan oder deren Gemische.

Gegebenenfalls kann die aufzuschleudernde Lösung noch Additive, wie Anti-oxidantien, Singulett-Sauerstoff-Quencher oder UV-Absorber enthalten. Bevorzugt enthält die aufzuschleudernde Lösung bis zu 5 bis 10 Gew.-%, bezogen auf den Feststoffgehalt der aufzuschleudernden Lösung, einer Mischung von mehreren Antioxidantien, Singulett-Sauerstoff-Quenchern und UV-Absorbern. Bei Verwendung von Singulett-Sauerstoff-Quenchern, wie Nickeldithiolen-Komplexen (DE-A-3 505 750, DE-A-3 505 751, Dyes and Pigments, Band 8, Seiten 381 bis 388, 1987), können vorzugsweise bis zu 10 Gew.-%, bezogen auf den Feststoffgehalt der aufzuschleudernden Lösung, in der Lösung enthalten sein.

Beim erfindungsgemäßen optischen Aufzeichnungsmedium liegt die gegenüber Laserlicht empfindliche Schicht in Form einer homogenen, dünnen, glatten Schicht vor, die eine hohe optische Qualität besitzt. Die Reflektivitäten liegen im allgemeinen im Bereich > 15 %. Ferner ist das neue Aufzeichnungsmedium bei der Wellenlänge des verwendeten Lasers hinreichend empfindlich, so daß eine günstige Schwellenenergie resultiert und wobei die zu speichernde Information in Form von Pits eingeschrieben werden kann, wodurch ein ausgezeichnetes Singal:Rausch-Verhältnis erzielt wird.

Das erfindungsgemäße Aufzeichnungsmedium ist gegenüber atmosphärischen Einflüssen und Tageslicht sehr stabil.

Als Laserlichtquelle eignen sich wegen der geringen Größe des Bauteils, des geringen Energiebedarfs und der Möglichkeit der direkten Modulation der optischen Ausgangsleistung durch Modulation des elektrischen Antriebsstromes, Festkörper-Injektionslaser, die im nahen Infrarot emittieren, vor allem der AlGaAs-Laser, der im Wellenlängenbereich von 750 bis 900 nm arbeitet, besonders gut.

Die folgenden Beispiele sollen die Erfindung näher erläutern.

A) Herstellung der Farbstoffe

Beispiel 1

4,1 g (9,5 mmol) 1-[(N-Hexylcarbamoyl)methyl]-2,3,3-trimethyl-3H-indoliumiodid und 1,4 g (4,9 mmol) Glutaconaldehydbisanil-hydrochlorid wurden in 20 ml Ethanol gelöst. Man erhitzte das Reaktionsgemisch unter Rückfluß, fügt bei dieser Temperatur 1 ml Acetanhydrid zu, rührte weitere 2 Minuten bei dieser Temperatur und tropfte dann 2,6 ml (19 mmol) Triethylamin zu. Die intensiv blaugrün gefärbte Lösung wurde weitere 10 Minuten unter Rückfluß erhitzt und dann mit 0,75 g (5 mmol) Natriumiodid versetzt. Man ließ dann unter Rühren langsam abkühlen und tropfte die Farbstoff enthaltende Lösung in 350 ml Methyl-tert-butylether. Der ausgeschiedene Farbstoff wurde abgesaugt, mit Ether gewaschen und unter vermindertem Druck getrocknet. Man erhielt 6,6 g des Polymethinfarbstoffs der Formel

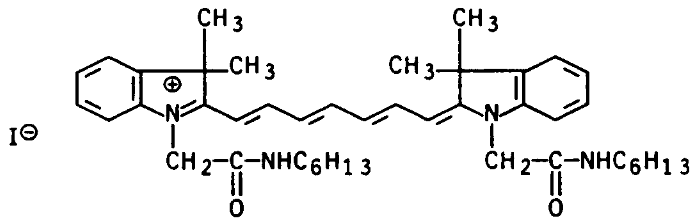

als grünen, metallisch glänzenden Feststoff.

Der Farbstoff wurde durch Chromatographie an Kieselgel mit Methylenchlorid/Ethanol (10:2 v/v) als Eluens weiter gereinigt. Schmp. 165 bis 167 ° C; $\lambda_{max}$ = 741 nm (MeOH).

Beispiel 2

3,2 g (20 mmol) 2,3,3-Trimethyl-3H-indol und 4,5 g (20 mmol) 3-Brompropionsäure-N-isopentylamid wurden in 20 ml Xylol gelöst und 8 Stunden unter Rückfluß gerührt. Dann gab man bei dieser Temperatur 100 ml Methyl-tert-butylether langsam zu, ließ abkühlen und dekantierte vom Niederschlag ab. Das ausgefallene amorphe Indolenium-Salz wurde nochmals mit Methyl-tert-butylether verrührt, anschließend wurde erneut dekantiert und der Rückstand in 30 ml Ethanol gelöst. Dazu wurden 2,85 g (10 mmol) Glutaconaldehydbisanil-hydrochlorid zugegeben und dann das Reaktionsgemisch 5 Minuten unter Rückfluß gerührt. Man ließ dann 2 ml Acetanhydrid langsam zulaufen, rührte weitere 3 Minuten unter Rückfluß und gab 5,2 ml (7 mmol) Triethylamin zu. Nach weiteren 3 Minuten wurde mit 1,5 g (0,01 mol) Natriumiodid versetzt und die auf Raumtemperatur abgekühlte Lösung in 150 ml Methyl-tert-butylether unter Rühren eingetragen. Man erhielt 1,5 g des Polymethinfarbstoffs der Formel

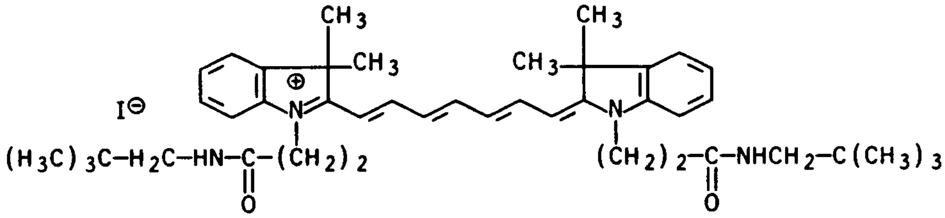

nach Chromatographie an Kieselgel mit Methylenglykol/Ethanol (10:2 v/v) als Eluens in Form von metallisch glänzenden Kristallen; Schmp. 165 bis 167 ° C; $\lambda_{max}$ = 760 nm ($CH_2Cl_2$).

Beispiel 3

25,2 g (135 mmol) 5-Chlor-2,3,3-trimethyl-3H-indol und 35 g (143 mmol) N-Phenyl-O-(2-bromethyl)-urethan wurden 3 Stunden auf 140 ° C erhitzt. Man ließ dann auf 80 ° C abkühlen, gab 200 ml Methyl-tert-butylether zu und rührte 1,5 Stunden bei Raumtemperatur. Das kristallisierte Indolenium-Salz wurde abgesaugt, mit Ether gewaschen und unter vermindertem Druck getrocknet. Ausbeute: 68 g; Schmp. 130 ° C.

4,4 g (10 mmol) des Indolenium-Salzes und 0,87 g (5 mmol) 2-Chlor-1-formyl-3-hydroxymethylencyclohex-1-en wurden in 40 ml Acetanhydrid eingetragen und unter Rühren 15 Minuten auf 140 °C erhitzt. Man ließ auf Raumtemperatur abkühlen und versetzte mit einer Lösung von 1,5 g (0,01 mol) Natriumiodid in 10 ml Methanol. Die Reaktionslösung trug man anschließend unter Rühren in 500 ml Methyl-tert-butylether ein und saugte den ausgefallenen Farbstoff ab. Der Farbstoff wurde in 20 ml Methylenchlorid aufgenommen, von unlöslichen Bestandteilen abfiltriert und anschließend das Lösungsmittel unter vermindertem Druck eingeengt. Man erhielt 2,6 g des Polymethinfarbstoffs der Formel

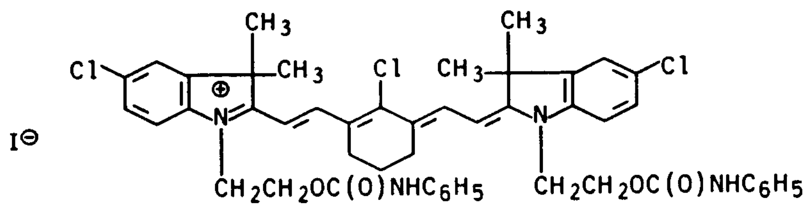

als metallisch glänzende Kristalle; $\lambda_{max}$ = 798 nm ($CH_2Cl_2$).

Die nachfolgend aufgeführten Farbstoffe wurden in analoger Weise hergestellt:

| Beispiel Nr. | | $\lambda_{max}$ [nm] | |
|---|---|---|---|
| 4 | 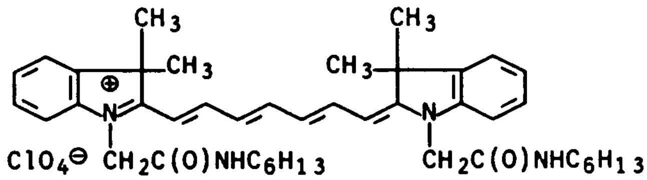 | 741 | (MeOH) |
| 5 | 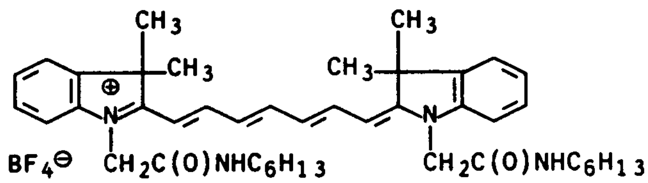 | 741 | (MeOH) |
| 6 | 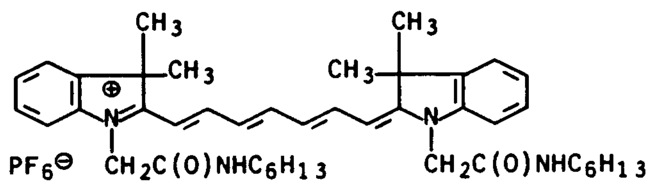 | 741 | (MeOH) |
| 7 | 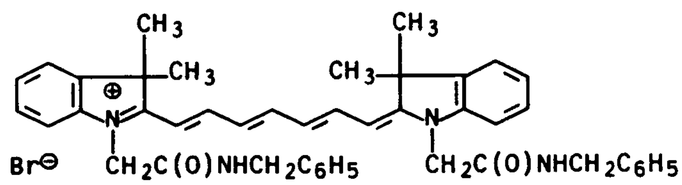 | 741 | (MeOH) |
| 8 | 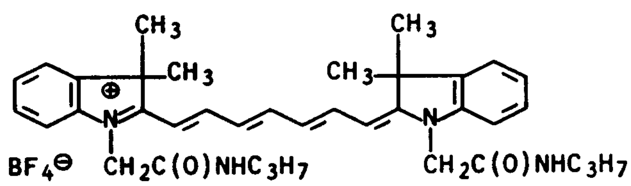 | 741 | (MeOH) |
| 9 | 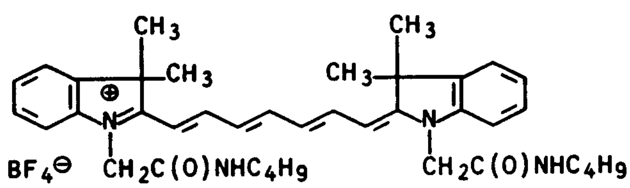 | 741 | (MeOH) |
| 10 | 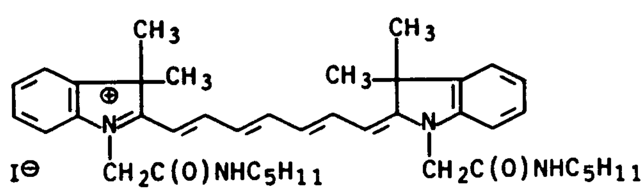 | 741 | (MeOH) |

| Beispiel Nr. | | λmax [nm] | |
|---|---|---|---|
| 11 | 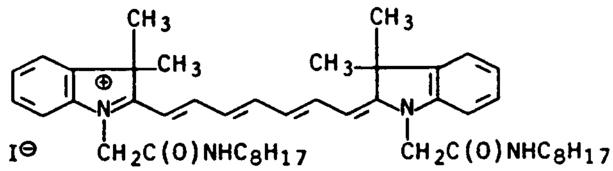 | 741 | (MeOH) |
| 12 | 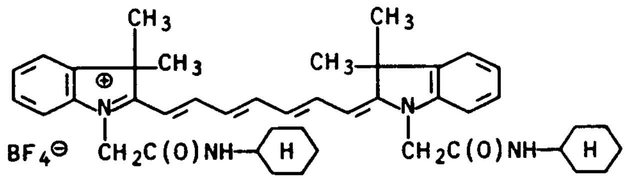 | 741 | (MeOH) |
| 13 | 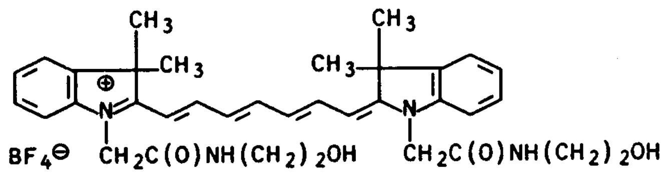 | 741 | (MeOH) |
| 14 | 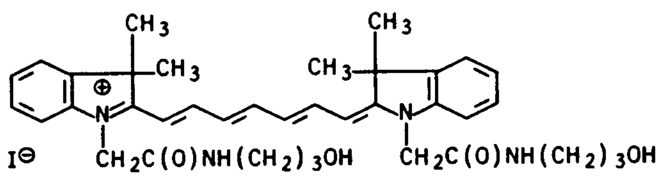 | 741 | (MeOH) |
| 15 | 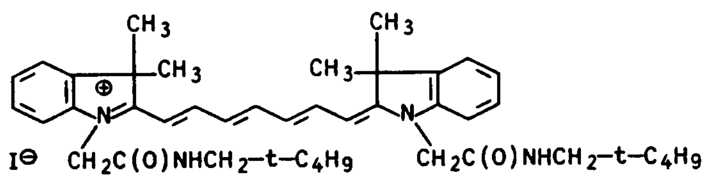 | 742 | (MeOH) |
| 16 | 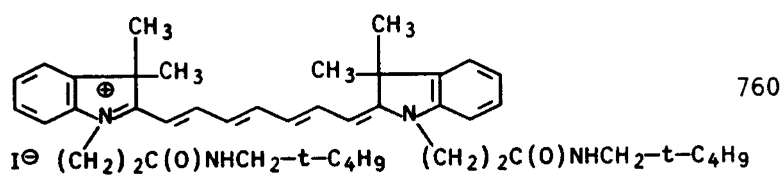 | 760 | ($CH_2Cl_2$) |
| 17 | 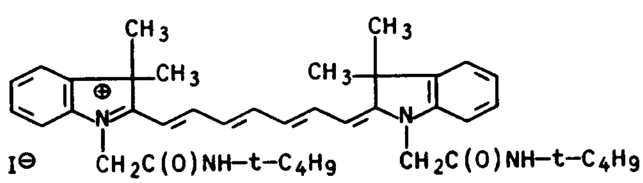 | 752 | ($CH_2Cl_2$) |

| Beispiel Nr. | | $\lambda_{max}$ [nm] |
|---|---|---|
| 18 | 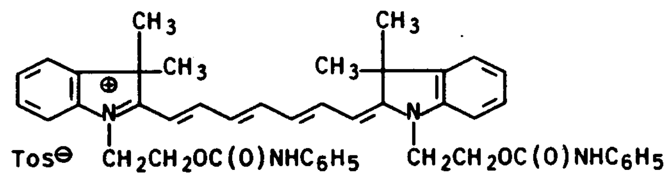 | 748 (EtOH) |
| 19 | 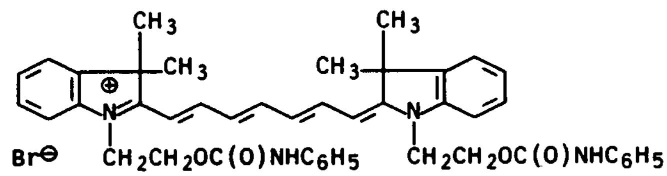 | 759 ($CH_2Cl_2$) |
| 20 | 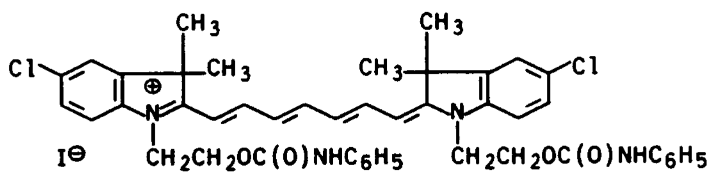 | 766 ($CH_2Cl_2$) |
| 21 | 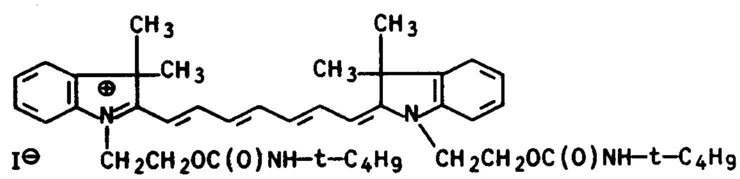 | 758 ($CH_2Cl_2$) |
| 22 | 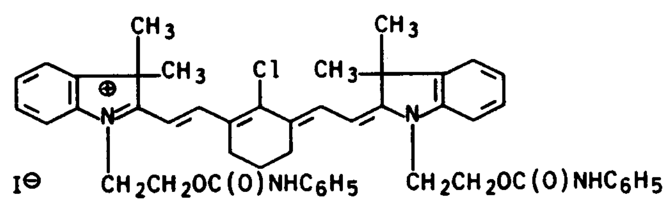 | 790 ($CH_2Cl_2$) |
| 23 | 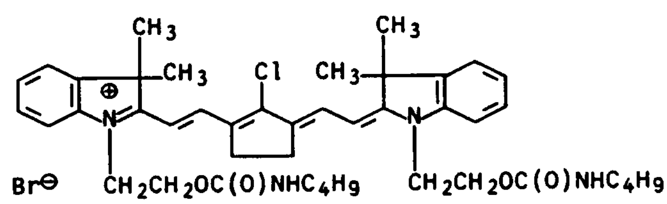 | 807 (EtOH) |

| Beispiel Nr. | | λmax [nm] |
|---|---|---|
| 24 | 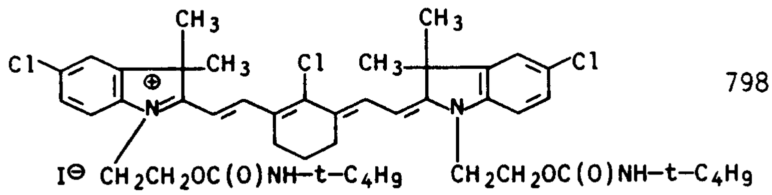 | 798 ($CH_2Cl_2$) |
| 25 | 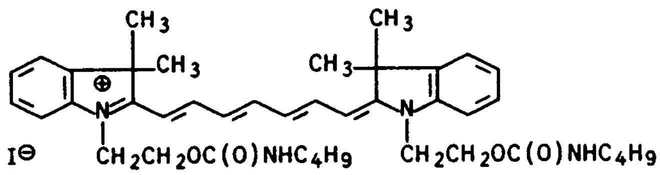 | 759 ($CH_2Cl_2$) |
| 26 | 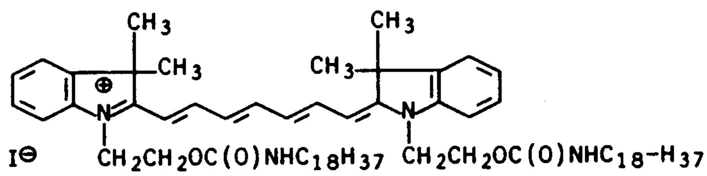 | 760 ($CH_2Cl_2$) |
| 27 | 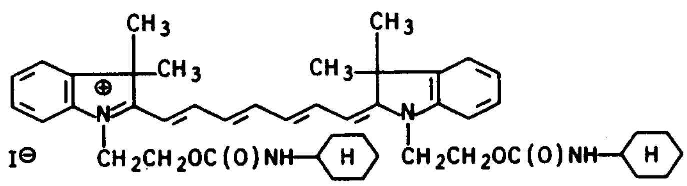 | 760 ($CH_2Cl_2$) |
| 28 | 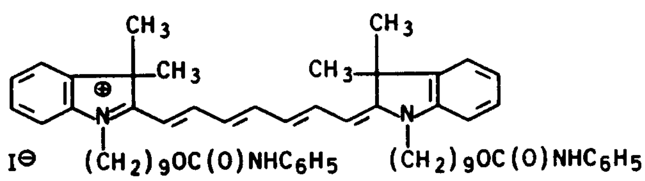 | 760 ($CH_2Cl_2$) |
| 29 | 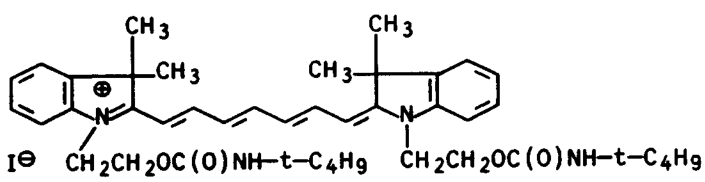 | 759 ($CH_2Cl_2$) |
| 30 | 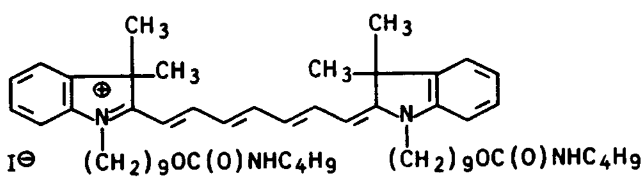 | 759 ($CH_2Cl_2$) |

| Beispiel Nr. | | λmax [nm] |
|---|---|---|
| 31 | 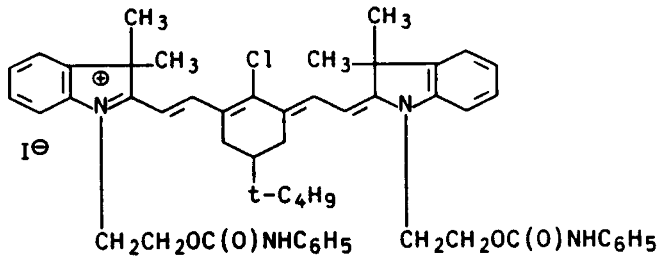 | 760 ($CH_2Cl_2$) |
| 32 | 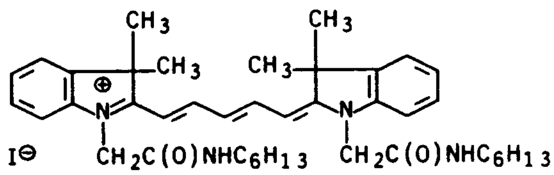 | 653 ($CH_2Cl_2$) |
| 33 | 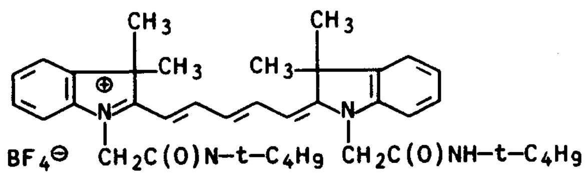 | 653 ($CH_2Cl_2$) |
| 34 | 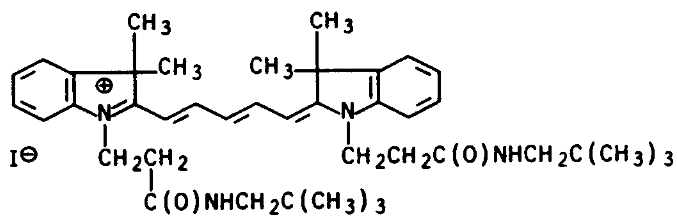 | 653 ($CH_2Cl_2$) |
| 35 | 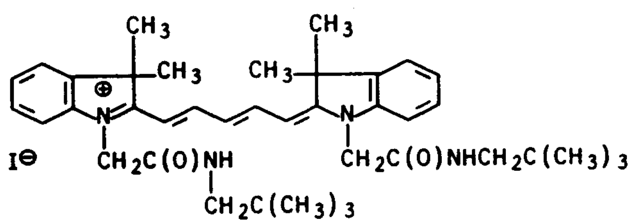 | 653 ($CH_2Cl_2$) |
| 36 | 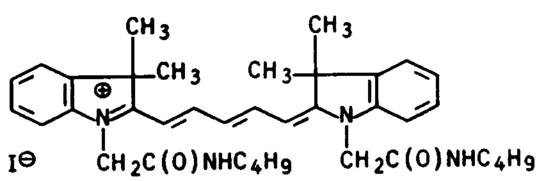 | 653 ($CH_2Cl_2$) |

| Beispiel Nr. | | $\lambda_{max}$ [nm] |
|---|---|---|
| 37 | 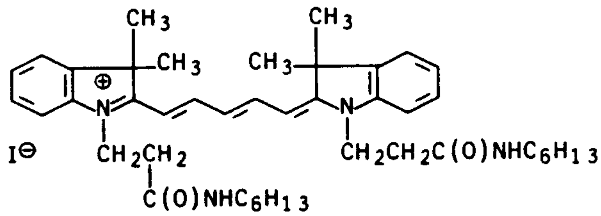 | 653 ($CH_2Cl_2$) |
| 38 | 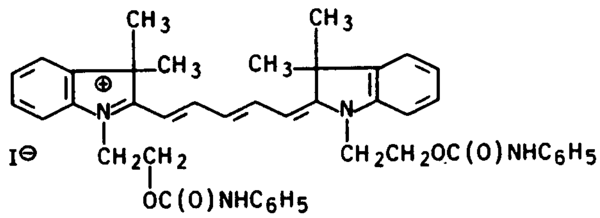 | 654 ($CH_2Cl_2$) |
| 39 | 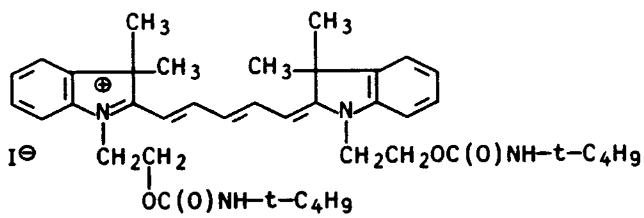 | 654 ($CH_2Cl_2$) |
| 40 | 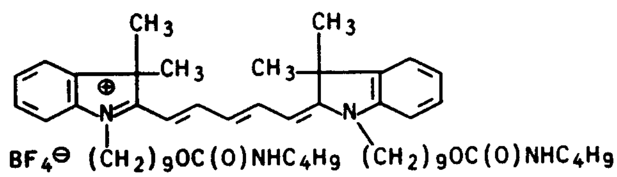 | 654 ($CH_2Cl_2$) |
| 41 | 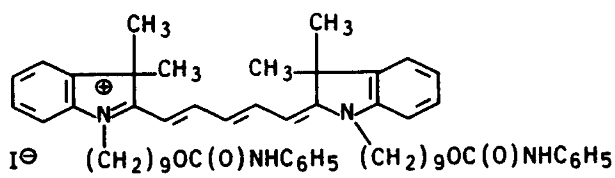 | 654 ($CH_2Cl_2$) |
| 42 | 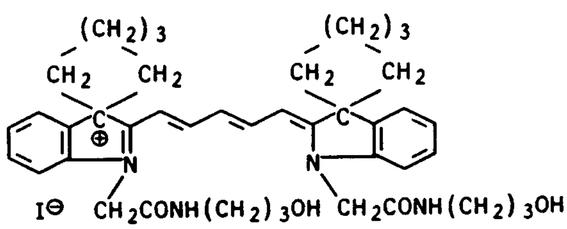 | 753 (EtOH) |

| Beispiel Nr. | | $\lambda_{max}$ [nm] |
|---|---|---|
| 43 | 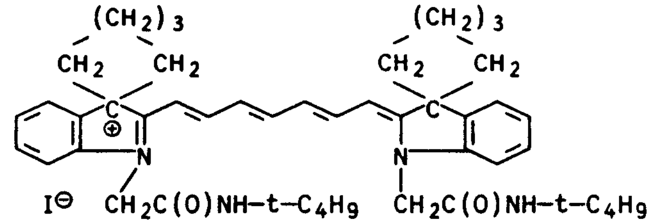 | 755 (EtOH) |

B) Anwendungsbeispiele

Beispiel 47

Eine 2,5 gew.-%ige Lösung des Farbstoffs Nr. 1 in Ethanol/Diacetonalkohol (80:20 v/v), welche 30 Gew.-%, bezogen auf den Feststoffgehalt der Lösung, MMA/MAS-Copolymer enthielt, wurde bei 1800 u/min auf ein gerilltes Polycarbonatsubstrat aufgeschleudert. Die so erhaltene Schicht war homogen und hochreflektierend. Die Spurrillen wurden gut abgebildet. Die Schicht ließ sich mit einem Halbleiterlaser ($\lambda_{max}$ = 830 nm) sehr gut beschreiben. Die eingeschriebene Informationen können mit gutem Kontrast wieder ausgelesen werden.

Beispiel 48

Eine 2,5 gew.-%ige Lösung des Farbstoffs Nr. 6 in Ethanol/Diacetonalkohol (80:20 v/v), welche 30 Gew.-%, bezogen auf den Feststoffgehalt der Lösung, eines Phenolharzes als Bindemittel enthielt, wurde analog Beispiel 1 auf ein gerilltes Polycarbonatsubstrat aufgeschleudert. Man erhielt auf diese Weise eine homogene, hochreflektierende Farbstoff-Schicht, welche mit einem Halbleiterlaser sehr gut beschreibbar war. Die Spurrillen wurden gut abgebildet. Die eingeschriebene Information war im Klimatest stabil und kann mit gutem Kontrast wieder ausgelesen werden.

Beispiel 49

Eine 2,5 gew.-%ige Lösung des Farbstoffs Nr. 21 in Ethanol/Diacetonalkohol (80:20 v/v), welche 30 Gew.-% eines Phenolharzes als Bindemittel enthielt, wurde bei 1800 U/min auf eine Polycarbonat-Scheibe aufgeschleudert. Die erhaltene Farbstoffschicht war homogen und hochreflektierend. Sie ließ sich mit einem Halbleiterlaser empfindlich beschreiben. Die eingeschriebene Information kann mit gutem Kontrast beliebig oft wieder ausgelesen werden.

## Patentansprüche

**1.** Polymethinfarbstoffe der Formel I

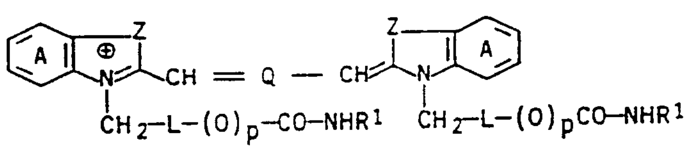

(I),

in der

p 0 oder 1,

Z Stickstoff, Sauerstoff, Schwefel, Isopropyliden, Cyclohexyliden oder den Rest CH = CH-,

Q einen Rest der Formel

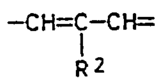 , 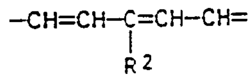 , 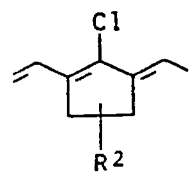 oder 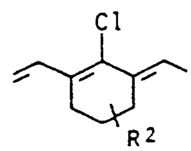 ,

wobei $R^2$ für Wasserstoff, Chlor, Brom oder $C_1$-$C_6$-Alkyl steht,

L eine direkte Bindung oder $C_1$-$C_{12}$-Alkylen,

$R^1$ $C_1$-$C_{20}$-Alkyl, das gegebenenfalls durch Hydroxy, Halogen oder Phenyl substituiert ist und durch ein oder mehrere Sauerstoffatome in Etherfunktion unterbrochen sein kann, gegebenenfalls substituiertes $C_5$-$C_7$-Cycloalkyl oder gegebenenfalls substituiertes Phenyl und

$X^{\ominus}$ ein Anion bedeuten und

die Ringe A gegebenenfalls substituiert und/oder benzoanelliert sind.

**2.** Polymethinfarbstoffe nach Anspruch 1, dadurch gekennzeichnet, daß

Z Schwefel, Isopropyliden, Cyclohexyliden oder den Rest -CH = CH- und

$R^1$ $C_1$-$C_{20}$-Alkyl, das gegebenenfalls durch Phenyl oder Hydroxy substituiert ist und durch 1 bis 3 Sauerstoffatome in Etherfunktion unterbrochen sein kann, $C_5$-$C_7$-Cycloalkyl oder Phenyl bedeuten.

**3.** Polymethinfarbstoffe nach Anspruch 1, dadurch gekennzeichnet, daß

Z Isopropyliden oder Cyclohexyliden,

Q einen Rest der Formel

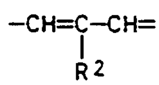 ,

-CH = CH-CH = CH-CH = ,

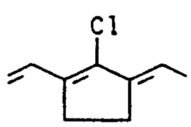 , 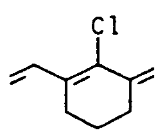 oder 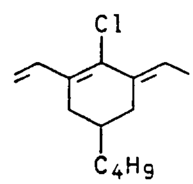 ,

wobei $R^2$ für Wasserstoff, Chlor, Brom oder Methyl steht,

L eine direkte Bindung oder $C_1$-$C_6$-Alkylen und

$R^1$ $C_1$-$C_{18}$-Alkyl, das gegebenenfalls durch Phenyl oder Hydroxy substituiert ist und durch 1 bis 3 Sauerstoffatome in Etherfunktion unterbrochen sein kann, Cyclohexyl oder Phenyl bedeuten und

die Ringe A gegebenenfalls durch Chlor substituiert und/oder benzoanelliert sind.

**4.** Optisches Aufzeichnungsmedium, enthaltend einen Träger und eine gegenüber Laserlicht empfindliche, Farbstoff und gegebenenfalls Bindemittel enthaltende dünne Schicht, dadurch gekennzeichnet, daß der Farbstoff ein Polymethinfarbstoff ist, der die Formel I

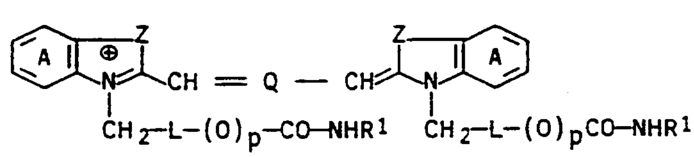 (I)

aufweist, in der

p 0 oder 1,

Z Stickstoff, Sauerstoff, Schwefel, Isopropyliden, Cyclohexyliden oder den Rest CH = CH-,

Q einen Rest der Formel

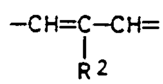 , 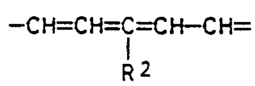 , 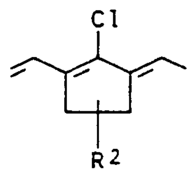 oder 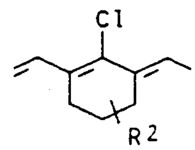 ,

wobei $R^2$ für Wasserstoff, Chlor, Brom oder $C_1$-$C_6$-Alkyl steht,

L eine direkte Bindung oder $C_1$-$C_{12}$-Alkylen,

$R^1$ $C_1$-$C_{20}$-Alkyl, das gegebenenfalls durch Hydroxy, Halogen oder Phenyl substituiert ist und durch ein oder mehrere Sauerstoffatome in Etherfunktion unterbrochen sein kann, gegebenenfalls substituiertes $C_5$-$C_7$-Cycloalkyl oder gegebenenfalls substituiertes Phenyl und

$X^\ominus$ ein Anion bedeuten und

die Ringe A gegebenenfalls substituiert und/oder benzoanelliert sind.

**5.** Optisches Aufzeichnungsmedium nach Anspruch 4, dadurch gekennzeichnet, daß

Z Schwefel, Isopropyliden, Cyclohexyliden oder den Rest -CH = CH- und

$R^1$ $C_1$-$C_{20}$-Alkyl, das gegebenenfalls durch Phenyl oder Hydroxy substituiert ist und durch 1 bis 3 Sauerstoffatome in Etherfunktion unterbrochen sein kann, $C_5$-$C_7$-Cycloalkyl oder Phenyl bedeuten.

**6.** Optisches Aufzeichnungsmedium nach Anspruch 4, dadurch gekennzeichnet, daß

Z Isopropyliden oder Cyclohexyliden,

Q einen Rest der Formel

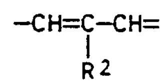 ,

-CH = CH-CH = CH-CH = ,

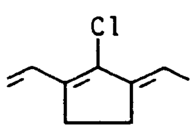 , 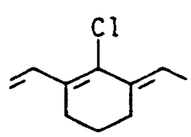 oder 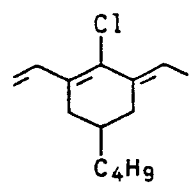 ,

wobei $R^2$ für Wasserstoff, Chlor, Brom oder Methyl steht,

L eine direkte Bindung oder $C_1$-$C_6$-Alkylen und

$R^1$ $C_1$-$C_{18}$-Alkyl, das gegebenenfalls durch Phenyl oder Hydroxy substituiert ist und durch 1 bis 3 Sauerstoffatome in Etherfunktion unterbrochen sein kann, Cyclohexyl oder Phenyl bedeuten und

die Ringe A gegebenenfalls durch Chlor substituiert und/oder benzoanelliert sind.

## Claims

**1.** A polymethine dye of the formula I

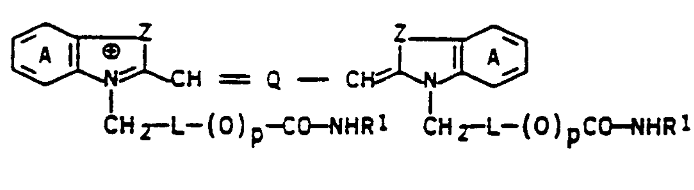 (I)

where

p is 0 or 1,

Z is nitrogen, oxygen, sulfur, isopropylidene, cyclohexylidene or the radical -CH = CH-,

Q is a radical of the formula

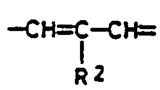 , 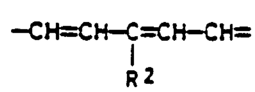 , 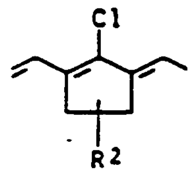 or 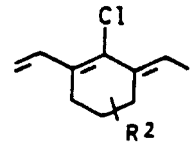 ,

where $R^2$ is hydrogen, chlorine, bromine or $C_1$-$C_6$-alkyl,

L is a direct bond or $C_1$-$C_{12}$-alkylene,

$R^1$ is $C_1$-$C_{20}$-alkyl which may be substituted by hydroxyl, halogen or phenyl and which may be interrupted by one or more oxygen atoms in ether function, substituted or unsubstituted $C_5$-$C_7$-cycloalkyl or substituted or unsubstituted phenyl,

$X^{\ominus}$ is an anion, and

the rings A may each be substituted and/or benzofused.

2. A polymethine dye as claimed in claim 1, wherein

Z is sulfur, isopropylidene, cyclohexylidene or the radical -CH = CH-, and

$R^1$ is $C_1$-$C_{20}$-alkyl which may be substituted by phenyl or hydroxyl and which may be interrupted by from 1 to 3 oxygen atoms in ether function, $C_5$-$C_7$-cycloalkyl or phenyl.

3. A polymethine dye as claimed in claim 1, wherein

Z is isopropylidene or cyclohexylidene,

Q is a radical of the formula

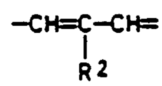 ,

-CH = CH-CH = CH-CH = ,

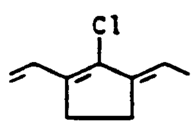 , 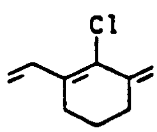 or 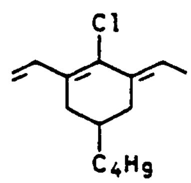 ,

where $R^2$ is hydrogen, chlorine, bromine or methyl,

L is a direct bond or $C_1$-$C_6$-alkylene,

$R^1$ is $C_1$-$C_{18}$-alkyl which may be substituted by phenyl or hydroxyl and which may be interrupted by from 1 to 3 oxygen atoms in ether function, cyclohexyl or phenyl, and

the rings A may each be substituted by chlorine and/or benzofused.

4. An optical recording medium comprising a support and a thin film which is sensitive to laser light and contains a dye with or without a binder, wherein the dye is a polymethine dye of the formula I

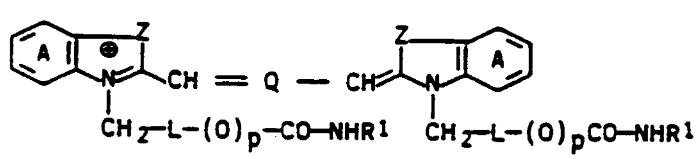 (I)

where

p is 0 or 1,
Z is nitrogen, oxygen, sulfur, isopropylidene, cyclohexylidene or the radical -CH = CH-,
Q is a radical of the formula

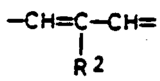 , 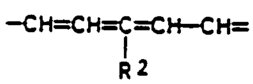 , 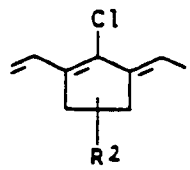 or 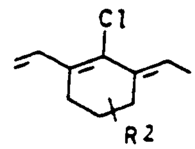 ,

where $R^2$ is hydrogen, chlorine, bromine or $C_1$-$C_6$-alkyl,
L is a direct bond or $C_1$-$C_{12}$-alkylene,
$R^1$ is $C_1$-$C_{20}$-alkyl which may be substituted by hydroxyl, halogen or phenyl and which may be interrupted by one or more oxygen atoms in ether function, substituted or unsubstituted $C_5$-$C_7$-cycloalkyl or substituted or unsubstituted phenyl,
$X^{\ominus}$ is an anion, and
the rings A may each be substituted and/or benzofused.

**5.** An optical recording medium as claimed in claim 4, wherein
Z is sulfur, isopropylidene, cyclohexylidene or the radical -CH = CH-, and
$R^1$ is $C_1$-$C_{20}$-alkyl, which may be substituted by phenyl or hydroxyl and which may be interrupted by from 1 to 3 oxygen atoms in ether function, $C_5$-$C_7$-cycloalkyl or phenyl.

**6.** An optical recording medium as claimed in claim 4, wherein
Z is isopropylidene or cyclohexylidene,
Q is a radical of the formula

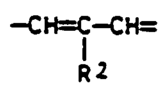 ,

-CH = CH-CH = CH-CH = ,

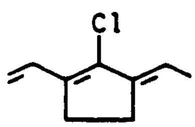 , 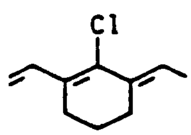 or 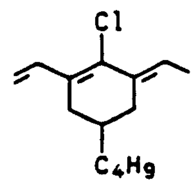 ,

where $R^2$ is hydrogen, chlorine, bromine or methyl,
L is a direct bond or $C_1$-$C_6$-alkylene,
$R^1$ is $C_1$-$C_{18}$-alkyl which may be substituted by phenyl or hydroxyl and which may be interrupted by from 1 to 3 oxygen atoms in ether function, cyclohexyl and/or phenyl, and
the rings A may each be substituted by chlorine or benzofused.

## Revendications

**1.** Colorants de la famille des polyméthines de formule I

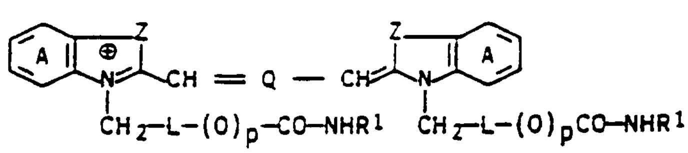 (I),

dans laquelle

- p est mis pour 0 ou 1,
- Z représente un atome d'azote, d'oxygène, de soufre, un reste isopropylidène, cyclohexylidène ou le reste CH = CH-
- Q représente un reste de formule

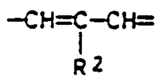 , 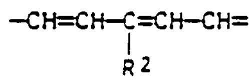 , 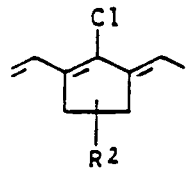 ou 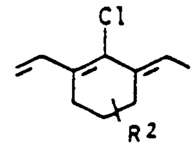 ,

  où $R^2$ est mis pour un atome d'hydrogène, de chlore, de brome ou pour un reste alkyle en $C_1$-$C_6$,
- L représente une liaison directe ou un reste alkylène en $C_1$-$C_{12}$
- $R^1$ représente un reste alkyle en $C_1$-$C_{20}$ qui est eventuellement substitue par un groupement hydroxy, un atome d'halogène ou un reste phényle et peut être interrompu par un ou plusieurs atomes d'oxygène en fonction éther, un reste cycloalkyle en $C_5$-$C_7$ éventuellement substitué ou un reste phényle éventuellement substitué, et
- $X^{\ominus}$ représente un anion et

les noyaux A sont éventuellement substitués et/ou benzocondensés.

**2.** Colorants de la famille des polyméthines selon la revendication 1, caractérisés en ce que

- Z représente un atome de soufre, un reste isopropylidène, cyclohexylidène ou le reste -CH = CH- et
- $R^1$ représente un reste alkyle en $C_1$-$C_{20}$ qui est éventuellement substitué par un groupement phényle ou hydroxy et peut être interrompu par 1 à 3 atomes d'oxygène en fonction éther, un reste cycloalkyle en $C_5$-$C_7$ ou un reste phényle.

**3.** Colorants de la famille des polyméthines selon la revendication 1, caractérises en ce que

- Z représente un reste isopropylidène ou cyclohexylidène,
- Q représente un reste de formule

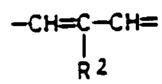 ,

-CH = CH-CH = CH-CH = ,

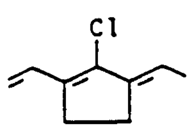 , 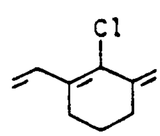 ou 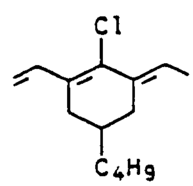 ,

  où $R^2$ est mis pour un atome d'hydrogène, de chlore, de brome ou pour un reste méthyle,
- L représente une liaison directe ou un reste alkylène en $C_1$-$C_6$
- $R^1$ représente un reste alkyle en $C_1$-$C_{18}$ qui est éventuellement substitue par un groupement phényle ou hydroxy et peut être interrompu par 1 à 3 atomes d'oxygène en fonction éther, un reste cyclohexyle ou un reste phényle, et

les noyaux A sont éventuellement substitués par des atomes de chlore et/ou benzocondenses.

**4.** Support d'enregistrement optique, comprenant un substrat et une couche mince, sensible à la lumière laser, contenant un colorant et éventuellement un liant, caractérisé en ce que le colorant est un colorant de la famille des polyméthines qui répond à la formule I

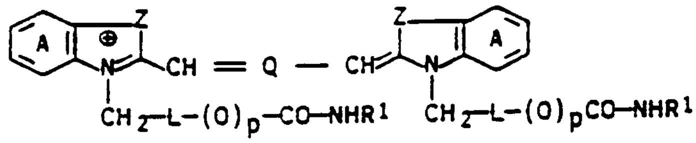

(I)

dans laquelle

p est mis pour 0 ou 1,

Z représente un atome d'azote, d'oxygène, de soufre, un reste isopropylidène, cyclohexylidène ou le reste CH = CH-

Q représente un reste de formule

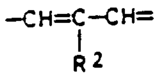 , 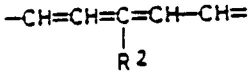 , 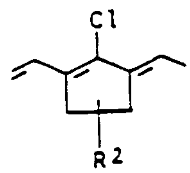 ou 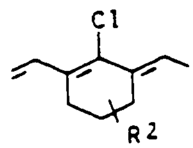 ,

où $R^2$ est mis pour un atome d'hydrogène, de chlore, de brome ou pour un reste alkyle en $C_1$-$C_6$,

L représente une liaison directe ou un reste alkylène en $C_1$-$C_{12}$,

$R^1$ représente un reste alkyle en $C_1$-$C_{20}$ qui est éventuellement substitue par un groupement hydroxy, un atome d'halogène ou un reste phényle et peut être interrompu par un ou plusieurs atomes d'oxygène en fonction éther, un reste cycloalkyle en $C_5$-$C_7$ éventuellement substitué ou un reste phényle éventuellement substitué, et

$X^{\ominus}$ représente un anion et

les noyaux A sont éventuellement substitués et/ou benzocondensés.

**5.** Support d'enregistrement optique selon la revendication 4, caractérisé en ce que

Z représente un atome de soufre, un reste isopropylidène, cyclohexylidène ou le reste -CH = CH- et

$R^1$ représente un reste alkyle en $C_1$-$C_{20}$ qui est éventuellement substitué par un groupement phényle ou hydroxy et peut être interrompu par 1 à 3 atomes d'oxygène en fonction éther, un reste cycloalkyle en $C_5$-$C_7$ ou un reste phényle.

**6.** Support d'enregistrement optique selon la revendication 4, caractérisé en ce que

Z représente un reste isopropylidène ou cyclohexylidène,

Q représente un reste de formule

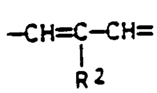 ,

-CH = CH-CH = CH-CH = ,

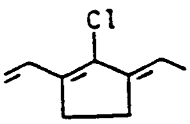 , 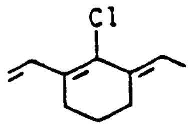 ou 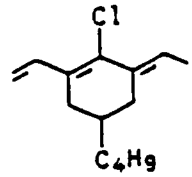 ,

où $R^2$ est mis pour un atome d'hydrogène, de chlore, de brome ou pour un reste methyle,

L représente une liaison directe ou un reste alkylène en $C_1$-$C_6$

$R^1$ représente un reste alkyle en $C_1$-$C_{18}$ qui est éventuellement substitué par un groupement phényle ou hydroxy et peut être interrompu par 1 à 3 atomes d'oxygène en fonction éther, un

reste cyclohexyle ou un reste phényle, et les noyaux A sont éventuellement substitués par des atomes de chlore et/ou benzocondensés.